# FASCICULE DE BREVET EUROPEEN

(11) **EP 2 867 097 B1**
(45) Date de publication et mention de la délivrance du brevet: **14.09.2016**
(21) Numéro de dépôt: 13731392.0
(22) Date de dépôt: 07.06.2013
(51) Int. Cl.: B62D 21/15, B62D 25/04

(54) **VÉHICULE AUTOMOBILE COMPRENANT UNE PARTIE DE RENFORT SUPPLÉMENTAIRE CAPABLE DE GUIDER LA DÉFORMATION DE LA STRUCTURE DE PILIER CENTRAL EN CAS DE CHOC LATÉRAL**
KRAFTFAHRZEUG MIT EINEM ZUSATZBEWEHRUNGSTEIL ZUR ANLEITUNG DER VERFORMUNG DER ZENTRALEN SÄULENSTRUKTUR BEI EINEM SEITENAUFPRALL
MOTOR VEHICLE COMPRISING AN ADDITIONAL REINFORCEMENT PORTION CAPABLE OF GUIDING THE DEFORMATION OF THE CENTRAL PILLAR STRUCTURE IN CASE OF A SIDE IMPACT

(30) Priorité: 29.06.2012 FR 1256221
(43) Date de publication de la demande: 06.05.2015
(73) Titulaire: Renault S.A.S., 92100 Boulogne-Billancourt (FR)
(72) Inventeur: ZANOLIN, Dominique, F-78150 Le Chesnay (FR)
(86) Numéro de dépôt international: PCT/FR2013/051319
(87) Numéro de publication internationale: WO 2014/001673

(56) Documents cités:
- EP-A1- 1 234 750
- EP-A1- 2 108 568
- EP-A2- 1 256 509
- JP-A- 2002 347 655
- JP-A- 2007 055 494

## Description

La présente invention concerne le domaine des véhicules automobiles, et notamment la structure latérale d'une caisse de carrosserie d'un véhicule automobile.

Plus particulièrement, l'invention concerne une structure de pilier central.

La structure latérale d'une caisse de carrosserie comprend généralement, sur chacun de ses flancs latéraux, une traverse supérieure et une traverse inférieure destinées à supporter respectivement une structure de toit et un marche-pied latéral. Les traverses supérieure et inférieure sont reliées verticalement entre elles par une structure de pilier central délimitant avec lesdites traverses deux ouvertures de portières.

Les normes de sécurité sont devenues de plus en plus sévères, de sorte qu'il est nécessaire de prévoir un amortissement de l'énergie d'un choc, notamment d'un choc latéral avec un élément extérieur, sur le flanc latéral de la caisse de carrosserie, afin d'améliorer la protection des passagers se trouvant à l'intérieur du véhicule automobile.

Afin de répondre à de telles normes de sécurité, des moyens de renfort du pilier central latéral se sont développés en vue de mieux contrôler la déformation de la structure de pilier central lors d'un choc latéral avec un élément extérieur.

On peut se référer à cet égard au document FR 2 944 771 (Renault) qui décrit une structure de pilier central comprenant un renfort constitué de deux pièces assemblées entre elles formant un renfort supérieur et un renfort inférieur. Le renfort supérieur est façonné en un matériau dont la limite élastique est supérieure à celle du matériau du renfort inférieur, de sorte qu'en cas de choc latéral, la structure de pilier central va se déformer par flexion, appelée phénomène de rotulage, au niveau du renfort inférieur.

Toutefois, lors de cette déformation, due à l'absorption de l'énergie d'un choc latéral, l'axe de la rotule est situé au niveau de la jonction entre les deux pièces de renfort, et ne permet plus de répondre aux nouvelles normes de sécurité dans lesquelles l'axe de la rotule doit être situé au point le plus bas possible. En effet, un tel renfort ne permet pas d'éviter l'intrusion de la structure de pilier central dans l'habitacle du véhicule automobile lors d'un choc latéral. Lors d'un choc latéral, la structure de pilier central vient alors en contact avec le passager en lui transmettant directement l'énergie du choc. Il est donc nécessaire de renforcer davantage la structure de pilier central afin d'éviter toute déformation risquant de heurter le passager du véhicule automobile.

Des solutions consistent soit à augmenter l'épaisseur du renfort inférieur, soit à allonger verticalement le renfort supérieur. Toutefois, de telles solutions nécessitent un ajout de masse important engendrant un emboutissage des pièces de renfort difficilement réalisable, ainsi qu'un positionnement de l'axe de la rotule peu contrôlable.

Le document EP1256509A2 montre un véhicule automobile tel que décrit par le préambule de la revendication 1.

Un objectif de l'invention est donc de pallier ces inconvénients et de fournir un véhicule automobile respectant les normes de sécurité en cas de choc latéral avec un élément extérieur contre un flanc latéral de la caisse de carrosserie. L'invention a donc pour but de réduire le risque d'intrusion de la structure de pilier central à l'intérieur de l'habitacle du véhicule lors d'un choc latéral.

Selon le mode de réalisation préféré, l'invention a pour objet un véhicule automobile comprenant une caisse de carrosserie comportant sur chacun des flancs latéraux une structure de pilier central délimitant avec une traverse supérieure et une traverse inférieure deux ouvertures de portières. Ladite structure de pilier central comprend des moyens de renfort comportant une première et une deuxième parties de renfort reliées entre elles et disposées suivant un axe vertical du véhicule automobile, ladite deuxième partie de renfort étant disposée à proximité de la traverse inférieure.

Le véhicule automobile comprend une partie de renfort supplémentaire fixée sur la surface intérieure de la deuxième partie de renfort à proximité d'une extrémité inférieure de la première portion de renfort, disposée dans le prolongement de l'extrémité inférieure de la première portion de renfort et comprenant à une extrémité inférieure une découpe arrondie entourant un perçage central de forme oblongue pratiqué dans la deuxième portion de renfort, la partie de renfort supplémentaire étant capable de guider la déformation par flexion de la structure de pilier central en cas de choc latéral avec un élément extérieur sur un des flancs latéraux.

Avantageusement, l'extrémité supérieure de la deuxième portion de renfort recouvre l'extrémité inférieure de la surface extérieure de la première portion de renfort.

La structure de pilier central peut présenter en section droite une forme sensiblement d'oméga.

Dans un mode de réalisation, la partie de renfort supplémentaire présente en section droite une forme sensiblement de U en concordance de forme avec la surface intérieure de la deuxième portion de renfort.

Avantageusement, la partie de renfort supplémentaire est fixée à la surface intérieure de la deuxième partie de renfort uniquement par son extrémité supérieure à proximité de la première partie de renfort.

L'extrémité supérieure de la partie de renfort supplémentaire est, par exemple, fixée à la deuxième partie de renfort par des moyens de soudure.

Les première et deuxième parties de renfort et la partie de renfort supplémentaire peuvent être réalisées par emboutissage d'un flanc de tôle.

La présente invention sera mieux comprise à la lecture de la description de quelques modes de réalisation, donnés à titre d'exemples nullement limitatifs et illustrés sur les dessins annexés :
- la figure 1 est une vue extérieure schématique d'une partie d'un flanc latéral d'une caisse de carrosserie d'un véhicule automobile selon l'invention ;
- la figure 2 est une vue intérieure schématique de la partie de flanc latéral selon la figure 1 ;
- la figure 3 est une vue en coupe III-III de la figure 2 ;

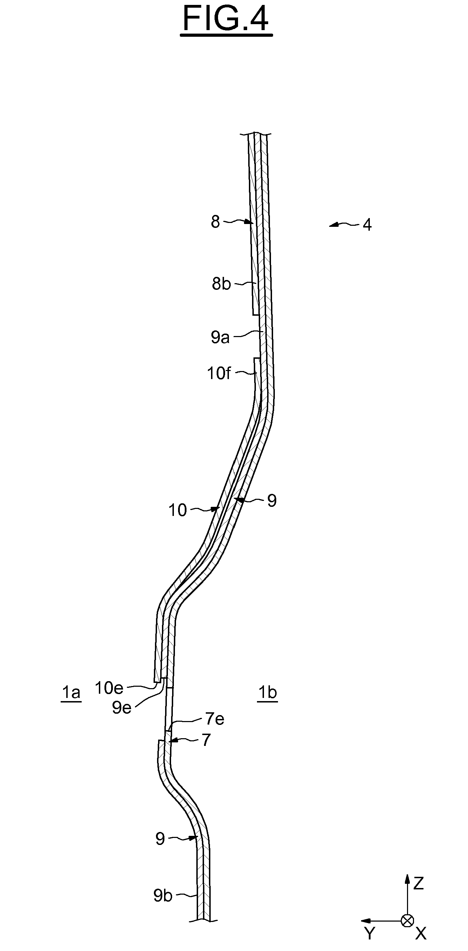

- la figure 4 est une vue en coupe IV-IV de la figure 2 ;
- la figure 5 représente la structure de pilier central selon la figure 2 en cas de choc latéral.

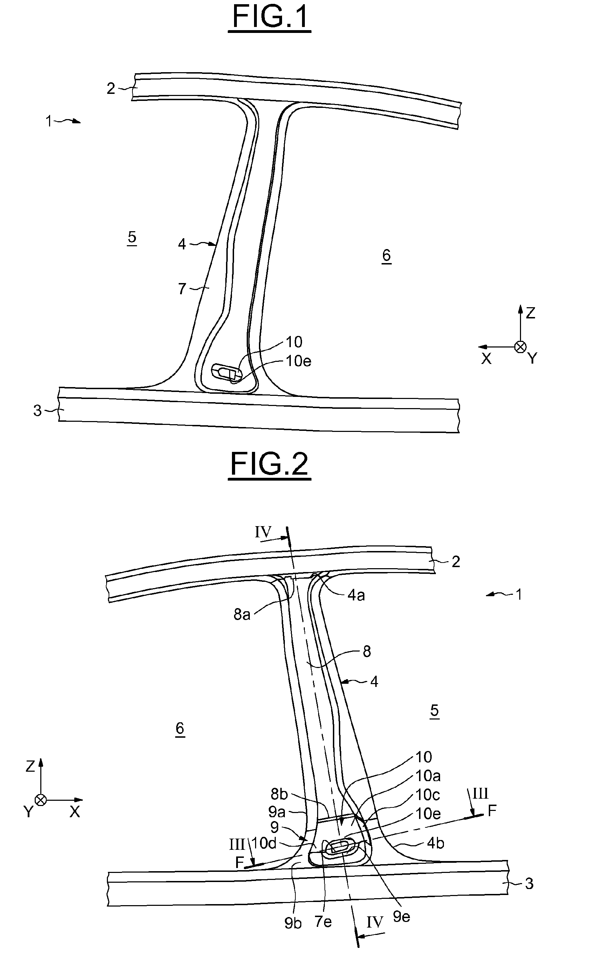

Dans la suite de la description, les termes « longitudinal », « transversal », « vertical », « avant », « arrière », « gauche » et « droite », s'entendent par rapport au repère orthogonal usuel des véhicules automobiles, représenté sur la figure 1, et comprenant :
- un axe longitudinal X, horizontal et dirigé de l'arrière vers l'avant du véhicule ;
- un axe transversal Y, horizontal, perpendiculaire à l'axe X et dirigé de droite à gauche du véhicule se déplaçant vers l'avant ;
- un axe Z, orthogonal aux axes X et Y et vertical dirigé de bas en haut.

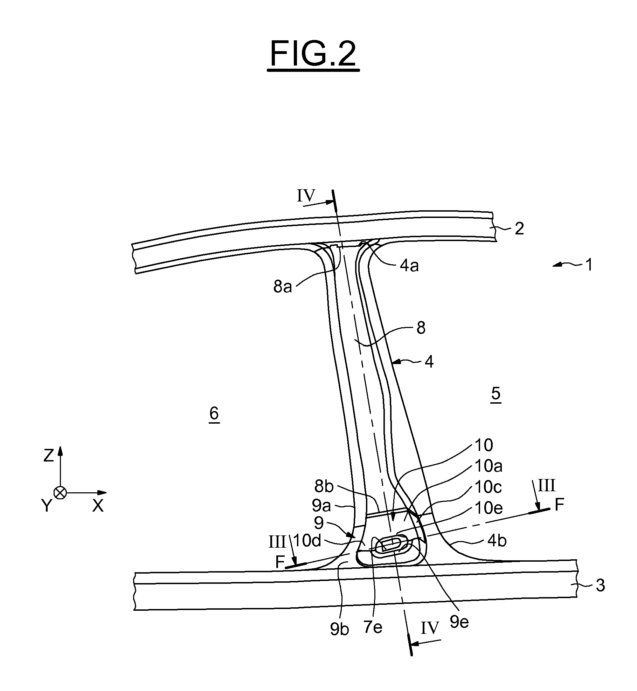

Telle qu'illustrée sur les figures 1 et 2, une partie d'un flanc latéral d'une caisse de carrosserie d'un véhicule automobile, référencée 1 dans son ensemble, comprend une traverse supérieure 2, une traverse inférieure 3 et une structure de pilier central 4 reliant verticalement les traverses supérieure et inférieure 2, 3. Chacune des traverses supérieure et inférieure 2, 3 se présente sous la forme d'une poutre sensiblement horizontale s'étendant suivant l'axe X. La caisse 1 du véhicule automobile délimite un intérieur 1a représentant l'habitacle du véhicule et un extérieur 1b du véhicule par tout ce qui se situe en dehors de la caisse de carrosserie. La structure de pilier central 4 joue le rôle d'absorbeur d'énergie en cas de collision entre un élément extérieur et le flanc latéral de la caisse du véhicule.

La structure de pilier central 4 se présente sous la forme d'une poutre sensiblement verticale, s'étendant suivant l'axe Z et reliée à ses extrémités 4a, 4b respectivement à la traverse supérieure 2 et à la traverse inférieure 3, par exemple à l'aide de points de soudure (non représentés) et délimite avec les traverses supérieure et inférieure 2, 3 et respectivement une structure de pilier avant (non représentée) et une structure de pilier arrière (non représentée), deux ouvertures de portières 5, 6 destinées à être fermées par une portière ou un panneau latéral (non représentés).

Telle qu'illustrée sur les figures, la structure de piler central 4 comprend un élément de côté de caisse 7 visible notamment sur la figure 1 représentant la vue de l'extérieur 1b du véhicule automobile et des moyens de renfort 8, 9, visibles notamment sur la figure 2, représentant la vue de l'habitacle 1a du véhicule. Les moyens de renfort comprennent une première partie de renfort 8 formant un renfort supérieur et une deuxième partie de renfort 9 formant un renfort inférieur.

La première partie de renfort 8 présente une première portion d'extrémité supérieure 8a reliée à la traverse supérieure 2 et une deuxième portion d'extrémité inférieure 8b recouverte par une première portion d'extrémité supérieure 9a de la deuxième partie de renfort 9. La deuxième partie de renfort 9 présente une deuxième portion d'extrémité inférieure destinée à être reliée à la traverse inférieure 3. La première partie de renfort 8 représente quasiment toute la hauteur de la structure de pilier central 4, par exemple les trois quarts de la hauteur, tandis que la deuxième partie de renfort 9 représente l'extrémité inférieure de la structure de pilier central 4.

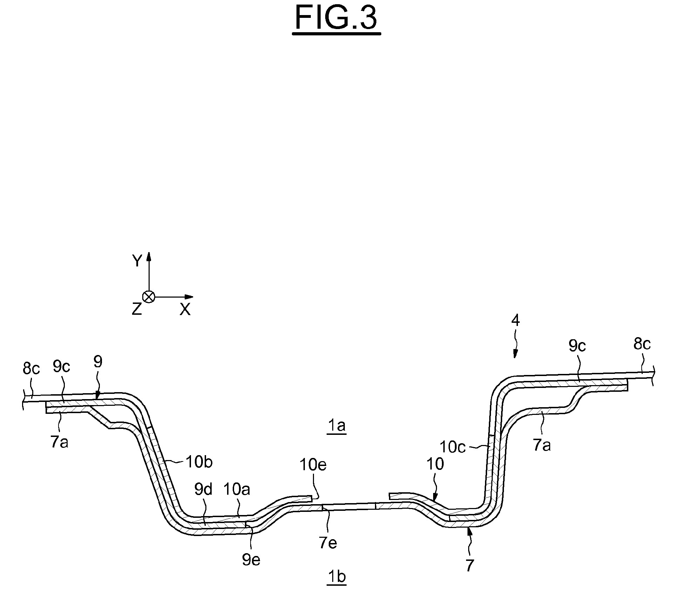

Les moyens de renfort 8, 9 et l'élément de côté de caisse 7 sont, par exemple, obtenus par emboutissage de flancs de tôles en acier et assemblés entre eux par collage, soudage, rivetage ou vissage. Telle qu'illustrée sur la figure 3, la structure de pilier central 4 présente en section droite une forme sensiblement d'oméga, c'est-à-dire un U dont les extrémités des portions latérales sont pliées pour former des pattes d'extrémité 7a, 8c, 9c se trouvant sensiblement dans un même plan.

La structure de pilier central 4 peut également comprendre une doublure intérieure (non représentée) permettant de recouvrir les moyens de renfort 8, 9 tout en laissant subsister des logements pour divers accessoires, tels que par exemple, une attache de ceinture, des câbles électriques ou encore un enrouleur de ceinture. La deuxième partie de renfort 9 présente sur la portion plane centrale 9d du oméga, un perçage central 9e de forme sensiblement oblongue formant un moyen de passage de câbles électriques vers l'intérieur de l'habitacle 1a. L'élément de côté de caisse 7 comprend également un perçage 7e faisant face au perçage 9e de la portion de renfort inférieure 9.

La structure de pilier central 4 comprend une partie de renfort supplémentaire 10 formant un moyen de guidage de la déformation de la structure de pilier central 4 en cas de choc latéral avec un élément extérieur E sur un des flancs latéraux 1 de la caisse du véhicule. La partie de renfort supplémentaire 10 est réalisée par emboutissage d'un flanc de tôle, par exemple en acier, et présente en section droite une forme sensiblement de U comprenant une portion centrale plane 10a et deux portions latérales 10b, 10c s'étendant respectivement à partir d'un côté de la portion centrale plane 10a vers l'intérieur 1a du véhicule automobile. La partie de renfort supplémentaire 10 est fixée sur la surface intérieure de la deuxième partie de renfort 9 à proximité de l'extrémité inférieure 8b de la première partie de renfort 8, et vient épouser la forme intérieure de la deuxième partie de renfort 9. La partie de renfort supplémentaire 10 est disposée dans le prolongement de l'extrémité inférieure 8b de la première partie de renfort 8, de manière à éviter toute rupture de matière. Une extrémité inférieure 10d de la portion centrale plane 10a du moyen de guidage 10 comprend une découpe arrondie 10e entourant le perçage central 9e de la deuxième portion de renfort 9. La partie de renfort supplémentaire 10 est fixée à la deuxième partie de renfort 9 uniquement par son extrémité supérieure 10f, par exemple par des points de soudure (non représentés).

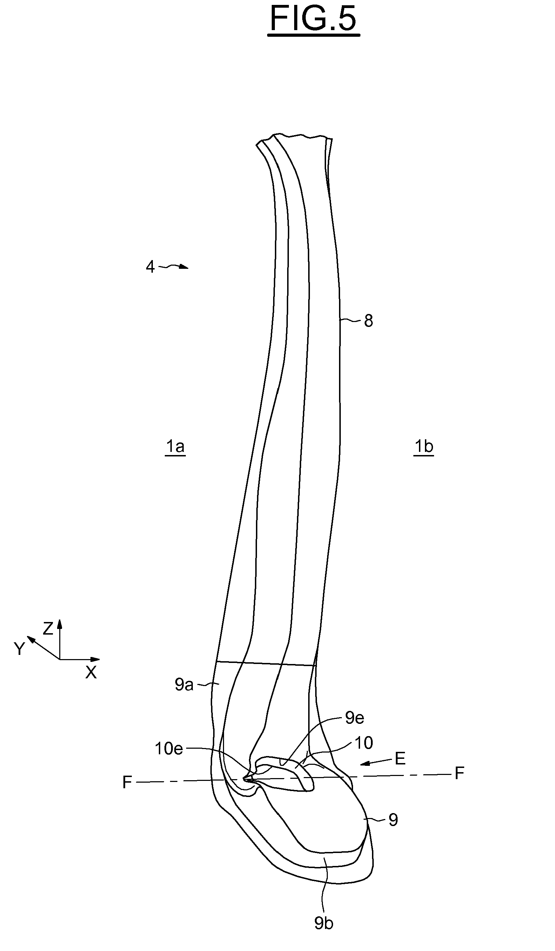

La figure 5 illustre les moyens de renfort 8, 9 et la partie de renfort supplémentaire 10 en cas de choc entre le flanc latéral 1 de la caisse du véhicule automobile et un élément extérieur E suivant la Flèche E, tel qu'un autre véhicule automobile. L'élément de carrosserie 7 n'est pas représenté sur la figure 5.

Lors d'un choc latéral d'un élément extérieur E contre la surface extérieure du flanc latéral 1 de la caisse de carrosserie, la première partie de renfort 8 reste sensiblement en place par comparaison à la deuxième partie de renfort 9 qui subit une moment de flexion autour d'un axe F suffisamment important pour engendrer sa déformation et un mouvement de rotule autour de l'axe F. L'axe F de la rotule est défini par l'extrémité inférieure de la partie de renfort supplémentaire 10. La partie de renfort supplémentaire 10 permet ainsi de contrôler la déformation par flexion de la structure de pilier central 4, et notamment la position de l'axe de la rotule. Plus l'axe de la rotule F-F est bas suivant l'axe vertical Z, moins le passager à l'intérieur de l'habitacle 1a est heurté par la structure de pilier central 4. En effet, la deuxième partie de renfort 9 est déformée et vient heurter un élément bas à l'intérieur du véhicule automobile, tel que, par exemple, la partie inférieure d'un siège du véhicule automobile (non représentée).

Grâce à l'invention décrite, la structure de pilier central du véhicule automobile respecte les normes de sécurité en cas de choc latéral avec un élément extérieur, tout en restant facile à mettre en oeuvre sur les structures de pilier central déjà existantes et sans engendrer un ajout de matière trop significatif.

## Revendications

1. Véhicule automobile comprenant une caisse de carrosserie (1) comportant sur chacun des flancs latéraux une structure de pilier central (4) délimitant avec une traverse supérieure (2) et une traverse inférieure (3) deux ouvertures de portières (5, 6), ladite structure de pilier central (4) comprenant des moyens de renfort comportant une première et une deuxième parties de renfort (8, 9) reliées entre elles et disposées suivant un axe vertical (Z) du véhicule automobile, ladite deuxième partie de renfort (9) étant disposée à proximité de la traverse inférieure (3), le véhicule automobile étant tel qu'il comprend une partie de renfort supplémentaire (10) fixée sur la surface intérieure de la deuxième partie de renfort (9) à proximité d'une extrémité inférieure (8b) de la première portion de renfort (8), le véhicule automobile étant **caractérisé en ce que** la partie de renfort supplémentaire est dans le prolongement de l'extrémité inférieure (8b) de la première portion de renfort (8) et comprend à une extrémité inférieure (10d) une découpe arrondie (10e) entourant un perçage central (9e) de forme oblongue pratiqué dans la deuxième portion de renfort (9), la partie de renfort supplémentaire étant capable de guider la déformation par flexion de la structure de pilier central (4) en cas de choc latéral avec un élément extérieur (E) sur un des flancs latéraux.

2. Véhicule automobile selon la revendication 1, dans lequel la deuxième portion de renfort (9) comprend une extrémité supérieure (9a) recouvrant l'extrémité inférieure (8b) de la surface extérieure de la première portion de renfort (8).

3. Véhicule automobile selon l'une quelconque des revendications précédentes, dans lequel la structure de pilier central (4) présente en section droite une forme sensiblement d'oméga.

4. Véhicule automobile selon la revendication 3, dans lequel la partie de renfort supplémentaire (10) présente en section droite une forme sensiblement de U en concordance de forme avec la surface intérieure de la deuxième portion de renfort (9).

5. Véhicule automobile selon la revendication 4, dans lequel la partie de renfort supplémentaire (10) est fixée à la surface intérieure de la deuxième partie de renfort (9) uniquement par son extrémité supérieure à proximité de la première partie de renfort (8).

6. Véhicule automobile selon la revendication 5, dans lequel l'extrémité supérieure du moyen de guidage de la déformation est fixée à la deuxième partie de renfort par des moyens de soudure.

7. Véhicule automobile selon l'une quelconque des revendications précédentes, dans lequel les première et deuxième parties de renfort (8, 9) et la partie de renfort supplémentaire (10) sont réalisées par emboutissage d'un flanc de tôle.

## Patentansprüche

1. Kraftfahrzeug umfassend eine Karosserie (1), welche an jeder der Seitenflanken eine zentrale Säulenstruktur (4), welche mit einer oberen Traverse (2) und einer unteren Traverse (3) zwei Türöffnungen (5, 6) begrenzt, aufweist, wobei die genannte zentrale Säulenstruktur (4) Verstärkungsmittel umfasst, welche einen ersten und einen zweiten Verstärkungsteil (8, 9), die miteinander verbunden und nach einer senkrechten Achse (Z) des Kraftfahrzeugs angeordnet sind, aufweisen, wobei der genannte zweite Verstärkungsteil (9) in der Nähe der unteren Traverse (3) angeordnet ist, wobei das Kraftfahrzeug derart ausgebildet ist, dass es einen zusätzlichen Verstärkungsteil (10) umfasst, der an der Innenfläche des zweiten Verstärkungsteils (9) in der Nähe eines unteren Endes (8b) des ersten Verstärkungsteils (8) befestigt ist, wobei das Kraftfahrzeug **dadurch gekennzeichnet ist, dass** der zusätzliche Verstärkungsteil in der Verlängerung des unteren Endes (8b) des ersten Verstärkungsteils (8) ist und an einem unteren Ende (10d) einen runden Ausschnitt (10e) umfasst, der eine zentrale Bohrung (9e) mit länglicher Form, die im zweiten Verstärkungsteil (9) ausgebildet ist, umgibt, wobei der zusätzliche Verstärkungsteil in der Lage ist, die Verformung durch Biegen der zentralen Säulenstruktur (4) im Fall eines seitlichen Zusammenstoßes mit einem äußeren Element (E) an einer der Seitenflanken zu führen.

2. Kraftfahrzeug nach Anspruch 1, bei dem der zweite Verstärkungsteil (9) ein oberes Ende (9a), das das untere Ende (8b) der Außenfläche des ersten Verstärkungsteils (8) überdeckt, umfasst.

3. Kraftfahrzeug nach einem der vorangehenden Ansprüche, bei dem die zentrale Säulenstruktur (4) im Querschnitt eine weitestgehend omegaartige Form aufweist.

4. Kraftfahrzeug nach Anspruch 3, bei dem der zusätzliche Verstärkungsteil (10) im Querschnitt eine mit der Form der Innenfläche des zweiten Verstärkungsteils (9) übereinstimmende weitestgehend U-artige Form aufweist.

5. Kraftfahrzeug nach Anspruch 4, bei dem der zusätzliche Verstärkungsteil (10) an der Innenfläche des zweiten Verstärkungsteils (9) nur an seinem oberen Ende in der Nähe des ersten Verstärkungsteils (8) befestigt ist.

6. Kraftfahrzeug nach Anspruch 5, bei dem das obere Ende des Mittels zum Führen der Verformung am zweiten Verstärkungsteil durch Schweißmittel befestigt ist.

7. Kraftfahrzeug nach einem der vorangehenden Ansprüche, bei dem der erste und der zweite Verstärkungsteil (8, 9) und der zusätzliche Verstärkungsteil (10) durch Tiefziehen eines Blechs realisiert sind.

## Claims

1. Motor vehicle which comprises a bodywork shell (1) which comprises at each of the lateral flanks a central pillar structure (4) which delimits with an upper cross-member (2) and a lower cross-member (3) two door openings (5, 6), said central pillar structure (4) comprising reinforcement means which comprise a first and a second reinforcement portion (8, 9) which are connected to each other and which are arranged along a vertical axis (Z) of the motor vehicle, said second reinforcement portion (9) being arranged close to the lower cross-member (3), the motor vehicle being such that it comprises an additional reinforcement portion (10) which is fixed to the inner surface of the second reinforcement portion (9) close to a lower end (8b) of the first reinforcement portion (8), the motor vehicle being **characterized in that** the additional reinforcement portion is in the extension of the lower end (8b) of the first reinforcement portion (8) and comprises at a lower end (10d) a rounded cut-out (10e) which surrounds an oblong central hole (9e) which is formed in the second reinforcement portion (9), the additional reinforcement portion being capable of guiding the deformation by means of flexion of the central pillar structure (4) in the event of a lateral impact with an outer element (E) at one of the lateral flanks.

2. Motor vehicle according to Claim 1, wherein the second reinforcement portion (9) comprises an upper end (9a) which covers the lower end (8b) of the outer surface of the first reinforcement portion (8).

3. Motor vehicle according to either of the preceding claims, wherein the central pillar structure (4) is substantially of omega-like form in cross section.

4. Motor vehicle according to Claim 3, wherein the additional reinforcement portion (10) is substantially U-shaped in cross section so as to correspond in terms of shape to the inner surface of the second reinforcement portion (9).

5. Motor vehicle according to Claim 4, wherein the additional reinforcement portion (10) is fixed to the inner surface of the second reinforcement portion (9) only by means of the upper end thereof close to the first reinforcement portion (8).

6. Motor vehicle according to Claim 5, wherein the upper end of the means for guiding the deformation is fixed to the second reinforcement portion by welding means.

7. Motor vehicle according to one of the preceding claims, wherein the first and the second reinforcement portions (8, 9) and the additional reinforcement portion (10) are produced by deep-drawing a sheet metal flank.
